# EUROPEAN PATENT APPLICATION

(11) **EP 4 191 906 A1**
(43) Date of publication of application: **07.06.2023**
(21) Application number: 21849428.4
(22) Date of filing: 28.07.2021

(54) **FAULT DIAGNOSIS METHODS, FAULT DIAGNOSIS RULE DETERMINING METHOD, DIAGNOSIS FUNCTION DEPLOYMENT METHOD, RELATED DEVICE, AND STORAGE MEDIUM**

(30) Priority: 29.07.2020 CN 202010744447
(71) Applicant: ZTE Corporation, Shenzhen, Guangdong 518057 (CN)
(72) Inventor: MA, Miaomiao, Shenzhen, Guangdong 518057 (CN); SUN, Si, Shenzhen, Guangdong 518057 (CN)
(74) Representative: Ipsilon
(86) International application number: PCT/CN2021/108866
(87) International publication number: WO 2022/022556

(57) **Abstract**

The present disclosure relates to the technical field of distributed devices, and provides a fault diagnosis method applicable to a main control single board of a distributed device. The fault diagnosis method includes: receiving attribute data of a function to be diagnosed; and analyzing, according to a preset diagnosis rule, the attribute data of the function to be diagnosed to obtain a diagnosis result. The present disclosure further provides another fault diagnosis method, a method for determining a fault diagnosis rule, a method for deploying a diagnostic function of a distributed device, a main control single board, a line card single board, a distributed device, and a computer-readable storage medium.

## Description

The present disclosure claims priority from the Chinese patent application No. 202010744447.5 filed with the China Patent Office on July 29, 2020, the entirety of which is incorporated herein by reference.

### TECHNICAL FIELD

The present disclosure relates to the technical field of distributed devices.

### BACKGROUND

With the development of network technology, distributed devices are widely used. For example, the high-end router is a distributed device with multiple processors. The high-end router, typically located in a core of the network, is mainly used for routing and forwarding of data packets, and has high throughput. Due to the important location of the high-end router, the demand on its availability is also very high, typically requiring the high-end router to operate continuously for 24 hours.

With the long-term operation of the high-end router, a fault will inevitably occur, and how to timely recognize the fault and quickly repair the device has become an urgent technical problem to be solved in the art.

### SUMMARY

As a first aspect of the present disclosure, there is provided a fault diagnosis method applicable to a main control single board of a distributed device, including: receiving attribute data of a function to be diagnosed; and analyzing, according to a preset diagnosis rule, the attribute data of the function to be diagnosed to obtain a diagnosis result.

As a second aspect of the present disclosure, there is provided a fault diagnosis method applicable to a line card single board of a distributed device including: receiving attribute data of functions to be diagnosed sent from a node; and analyzing, according to a diagnosis rule locally stored in the line card single board, attribute data of a function to be diagnosed which is matched with the locally stored diagnosis rule, to obtain a diagnosis result.

As a third aspect of the present disclosure, there is provided a method for determining a fault diagnosis rule, which is applicable to a big data processing server and includes: receiving attribute data of at least one function of a distributed device; determining, according to the received attribute data of the at least one function, attribute data that affects the at least one function of the distributed device; and generating a corresponding diagnosis rule according to the attribute data that affects the at least one function of the distributed device.

As a fourth aspect of the present disclosure, there is provided a method for deploying a diagnostic function of a distributed device, including: determining feature information of at least one function of the distributed device, where the distributed device includes a plurality of single boards, including a main control single board and at least one line card single board; and determining distribution information of a center server node, a node and a server node. The center server node is configured on the main control single board, and the main control single board configured with the center server node is capable of implementing the fault diagnosis method according to the first aspect of the present disclosure. Any one of the at least one function corresponds to a plurality of nodes, any one of the plurality of nodes is configured to collect attribute data of the function, and the plurality of nodes are configured on at least one of the plurality of single boards. The server node is configured on at least one of the plurality of single boards, and the line card single board configured with the server node is capable of implementing the fault diagnosis method according to the second aspect of the present disclosure.

As a fifth aspect of the present disclosure, there is provided a main control single board, including: one or more first processors; and a first memory having a first executable program stored thereon. The one or more first processors are capable of invoking the first executable program to implement the fault diagnosis method according to the first aspect of the present disclosure.

As a sixth aspect of the present disclosure, there is provided a line card single board, including: one or more second processors; and a second memory having a second executable program stored thereon. The one or more second processors are capable of invoking the second executable program to implement the fault diagnosis method according to the second aspect of the present disclosure.

As a seventh aspect of the present disclosure, there is provided a distributed device, including the main control single board according to the fifth aspect of the present disclosure, and at least one line card single board according to the sixth aspect of the present disclosure.

As an eighth aspect of the present disclosure, there is provided a computer-readable storage medium having stored thereon an executable program which, when invoked, causes any one of: the fault diagnosis method according to the first aspect of the present disclosure, the fault diagnosis method according to the second aspect of the present disclosure, the method for determining a fault diagnosis rule according to the third aspect of the present disclosure, or the method for deploying a diagnostic function of a distributed device according to the fourth aspect of the present disclosure, to be implemented.

### BRIEF DESCRIPTION OF DRAWINGS

FIG. 1 is a logic diagram of a fault diagnosis system according to the present disclosure.
FIG. 2 is a flowchart of a fault diagnosis method according to the present disclosure.
FIG. 3 is another flowchart of a fault diagnosis method according to the present disclosure.
FIG. 4 is a flowchart of operation S114 shown in FIG. 3.
FIG. 5 is yet another flowchart of a fault diagnosis method according to the present disclosure.
FIG. 6 is still another flowchart of a fault diagnosis method according to the present disclosure.
FIG. 7 is still another flowchart of a fault diagnosis method according to the present disclosure.
FIG. 8 is still another flowchart of a fault diagnosis method according to the present disclosure.
FIG. 9 is a flowchart of a method for determining a fault diagnosis rule according to the present disclosure.
FIG. 10 is a flowchart of a method for deploying a diagnostic function of a distributed device according to the present disclosure.
FIG. 11 is a schematic flowchart of a distributed device performing a diagnostic function according to the present disclosure.
FIG. 12 is a schematic diagram of a distributed device according to the present disclosure.
FIG. 13 is another schematic diagram of a distributed device according to the present disclosure.
FIG. 14 is yet another schematic diagram of a distributed device according to the present disclosure.
FIG. 15 is yet another schematic diagram of a distributed device according to the present disclosure.
FIG. 16 is a schematic diagram showing interaction between a big data processing server and a distributed device.

### DETAIL DESCRIPTION OF EMBODIMENTS

To improve understanding of the technical solution of the present disclosure for those skilled in the art, the fault diagnosis method according to the present disclosure will be described below in detail in conjunction with the accompanying drawings.

Example embodiments will be described more sufficiently below with reference to the accompanying drawings, but which may be embodied in different forms and should not be construed as limited to the embodiments set forth herein. Rather, these embodiments are provided so that the present disclosure will be thorough and complete, and will fully convey the scope of the present disclosure to those skilled in the art.

The embodiments of the present disclosure and features thereof may be combined with each other as long as they are not contradictory.

As used herein, the term "and/or" includes any and all combinations of one or more of the associated listed items.

The terminology used herein is for the purpose of describing specific embodiments only and is not intended to limit the present disclosure. As used herein, the singular forms "a", "an" and "the" are intended to include the plural forms as well, unless the context clearly indicates otherwise. It will be further understood that as used herein, the terms "comprise" and /or "consist of ..." specify the presence of stated features, integers, steps, operations, elements, and /or components, but do not preclude the presence or addition of one or more other features, integers, steps, operations, elements, components, and /or groups thereof.

Unless otherwise defined, all terms (including technical and scientific terms) used herein have the same meaning as commonly understood by one of ordinary skill in the art. It will be further understood that terms, such as those defined in commonly used dictionaries, should be interpreted as having a meaning that is consistent with their meaning in the context of the existing art and the present disclosure, and will not be interpreted in an idealized or overly formal sense unless expressly so defined herein.

A distributed device includes sub-devices located at different places, each of which is capable of performing a different function. In the present disclosure, the fault diagnosis method and the fault diagnosis system mentioned below are used to diagnose whether each function of the distributed device is normal.

In terms of hardware, the distributed device includes a plurality of single boards, which are a main control single board and at least one line card single board. The distributed device can perform multiple functions. Any one of the functions may be implemented by software or hardware on any single board, or may be implemented by cooperation of software or hardware on multiple single boards. Also, for the distributed device, each function may be a function to be diagnosed. Apparently, there is also a case where one or several functions of the distributed device are functions to be diagnosed.

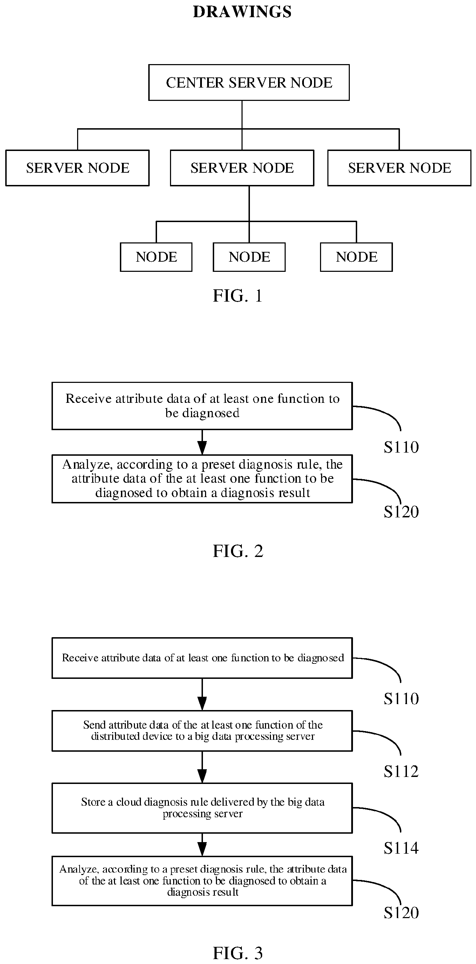

As shown in FIG. 1, the fault diagnosis system is logically divided into three layers, a center server node, server nodes, and nodes. Each single board is provided with a plurality of nodes and at least one server node. The main control single board is configured with a center server node. Apparently, the main control single board may also be configured with nodes and a server node. Each server node manages a plurality of nodes, and each center server node manages a plurality of server nodes.

Each function to be diagnosed corresponds to a plurality of nodes. In other words, for a function to be diagnosed, different pieces of attribute data may be collected via a plurality of nodes, and then reported to the server node that manages the plurality of nodes, to judge whether the corresponding function has a fault. If the server node cannot judge whether the function has a fault or cannot process the fault, the attribute data of the corresponding function to be diagnosed is reported to the center server node that manages the server node by the server node or by the node directly, where the center server node diagnoses the function to be diagnosed.

In the present disclosure, the specific type of the distributed device is not specifically limited. As an optional implementation, the distributed device may be a distributed router (i.e., a high-end router in related art).

As an aspect of the present disclosure, there is provided a fault diagnosis method applicable to a main control single board of a distributed device. As shown in FIG. 2, the fault diagnosis method includes operations S110 and S120.

At operation S110, receiving attribute data of at least one function to be diagnosed.

At operation S120, analyzing, according to a preset diagnosis rule, the attribute data of the at least one function to be diagnosed to obtain a diagnosis result.

The center server node mentioned above is deployed on a central processing unit (CPU) of the main control single board, and the fault diagnosis method shown in FIG. 2 implements a function of the center server node. After receiving the attribute data of the at least one function to be diagnosed corresponding to the center server node configured on the CPU of the main control single board, the center server node analyzes, according to a preset diagnosis rule, attribute data of the at least one function to be diagnosed to obtain a diagnosis result. Therefore, with this fault diagnosis method, faults of the distributed device can be quickly diagnosed, so that the faults can be timely discovered and the maintenance cost of the distributed device can be reduced, while the influence of the device faults on users of the distributed device is reduced, and the user experience is improved.

As described above, the function to be diagnosed may be distributed on a same single board, or may be distributed on multiple single boards. Accordingly, the diagnosis result may include: whether the function being diagnosed has a fault, a location of the fault (e.g., the specific single board with the fault), and a type of the fault.

In the present disclosure, how to perform troubleshooting and repair of the faulty function according to the diagnosis result is not specifically limited. For example, the main control single board may send the diagnosis result to a terminal device of a maintenance person, who formulates a fault repair scheme according to the diagnosis result. Alternatively, the main control single board may directly perform troubleshooting and repair of the faulty function according to the diagnosis result.

In the present disclosure, the specific type of the distributed device is not specifically limited, and as an optional implementation, the distributed device may be a high-end router. When the fault diagnosis method is applied to a high-end router, whether any function of the router has a fault can be judged quickly, and a faulty function can be located, so that the cost for maintaining the high-end router is significantly saved, the influence on a user due to device faults is reduced, and the user experience is improved.

In the present disclosure, the preset diagnosis rule is not specifically limited. For example, the preset diagnosis rule may be a local diagnosis rule stored locally in advance, or a cloud diagnosis rule delivered by a big data processing server.

As an optional implementation, the main control single board locally stores a local diagnosis rule and a cloud diagnosis rule.

It should be noted that the local diagnosis rule may be a diagnosis rule set by a maintenance person of the distributed device according to the operating condition and functions of the distributed device.

As an optional implementation, the cloud diagnosis rule may be a diagnosis rule determined by a big data processing server according to attribute data of a corresponding function collected by each node of the distributed device.

The big data processing server may collect attribute data of various functions of a plurality of distributed devices. Different distributed devices may perform a same function, and different faults may occur in different distributed devices performing the same function. Through the big data processing server, more data types can be received, and more comprehensive diagnosis rules can be generated. When the main control single board locally stores both the cloud diagnosis rule and the local diagnosis rule, the cloud diagnosis rule is preferentially utilized to diagnose the function to be diagnosed. When the cloud diagnosis rule is unavailable or cannot give a diagnostic result, the attribute data of the function to be diagnosed may be analyzed with the local diagnosis rule.

In the present disclosure, how the big data processing server obtains the attribute data is not specifically limited. For example, each single board where a node is located may directly upload the collected attribute data to the big data processing server. Apparently, each node may send the collected attribute data to a corresponding server node, and then the server node uploads the corresponding attribute data to the big data processing server. As an optional implementation, the server node may send the attribute data uploaded by each node to the main control single board configured with the center server node, and then the main control single board uploads the attribute data to the big data processing server.

For the implementation mode where the main control single board uploads the attribute data to the big data processing server, as shown in FIG. 3, before operation S120, the fault diagnosis method may further include: operations S 112 and S 114.

At operation S112, sending attribute data of the at least one function of the distributed device to a big data processing server.

At operation S114, storing a cloud diagnosis rule delivered by the big data processing server.

According to the received attribute data, the big data processing server determines attributes (also referred to as critical attributes) having an influence on the function to be diagnosed, and thereby generates a corresponding diagnosis rule.

Since the big data processing server provides services for a plurality of different distributed devices instead of merely a single distributed device, the diagnosis rules delivered by the big data processing server may not be filtered. In other words, diagnosis rules received by a current main control single board from the big data processing server may include a diagnosis rule that is not specific to the current main control single board (i.e., a diagnosis rule that cannot be executed by the current main control single board). In this case, the main control single board is desired to filter the received diagnosis rules.

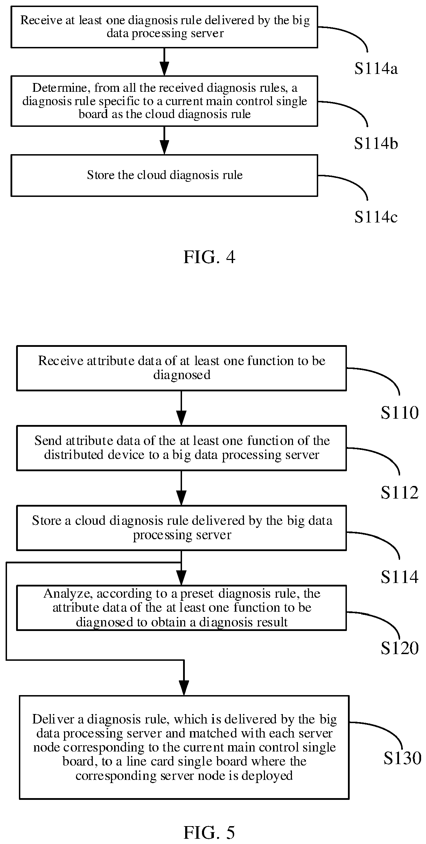

Accordingly, as shown in FIG. 4, operation S 114 may include: operations S 114a, S 114b, and S 114c.

At operation S 114a, receiving at least one diagnosis rule delivered by the big data processing server.

At operation S 114b, determining, from all the received diagnosis rules, a diagnosis rule specific to a current main control single board (i.e., a diagnosis rule that can be executed by the current main control single board) as the cloud diagnosis rule.

At operation S114c, storing the cloud diagnosis rule.

In the present disclosure, how to perform operation S 114b is not specifically limited. For example, the big data processing server may add, in each generated diagnosis rule, ID information of the main control single board corresponding to the diagnosis rule. After the main control single board receives diagnosis rules from the big data processing server, the ID information of the current main control single board is compared with the ID information carried in each diagnosis rule, to filter a diagnosis rule which can be executed by the current main control single board, and store the filtered rule locally in the main control single board as the cloud diagnosis rule.

As described above, the attribute data of each function of the distributed device may be uploaded to the center server node from each server node. Each server node may have a fault diagnostic function. Accordingly, as an optional implementation, as shown in FIG. 5, the fault diagnosis method may further include operation S130.

At operation S 130, delivering a diagnosis rule, which is delivered by the big data processing server and matched with each server node corresponding to the current main control single board, to a line card single board where the corresponding server node is deployed.

After each server node receives the corresponding diagnosis rule, the function to be diagnosed corresponding to the server node can be diagnosed.

As indicated above, each center server node may manage a plurality of server nodes, and each server node may manage functions within one or more regions. As an optional implementation, the diagnosis rule delivered by the big data processing server carries ID information of functions that can be diagnosed with the diagnosis rule. The main control single board may determine, according to the function corresponding to the region managed by each server node managed by the center server node deployed in the main control single board, the diagnosis rule corresponding to each server node and deliver the diagnosis rule to the line card single board where the corresponding server node is deployed.

In the present disclosure, when operation S120 is performed is not specifically limited. As an optional implementation, operation S120 may be performed immediately upon receiving the attribute data. As an optional implementation, before operation S120, the fault diagnosis method may further include a judgement operation of: judging whether the function to be diagnosed meets a first diagnosis trigger condition. When the judgment result is yes, operation S120 is performed.

In the present disclosure, the first diagnosis trigger condition is not specifically limited. For example, the first diagnosis trigger condition may be that the function to be diagnosed is a function that can be diagnosed by the center server node configured on the main control single board.

In the present disclosure, whether the first diagnosis trigger condition is met may be judged by parsing a first condition script that triggers the diagnostic function.

As an optional implementation, ID information may be configured for each function to be diagnosed by the center server node configured on the main control single board, and recorded in the first condition script. Therefore, whether the first diagnosis trigger condition is met may be judged by parsing the first condition script.

It should be noted that the condition script may be a condition script configured with the center server node configured on the main control single board.

In the present disclosure, the sequence between operation S 110 and the operation of "judging whether the first diagnosis trigger condition is met" is not specifically limited. The operation S110 may be performed before or after the operation of "judging whether the first diagnosis trigger condition is met."

In the present disclosure, the main control single board also correspondingly executes a specific function of the distributed device, and is configured with a plurality of nodes corresponding to the specific function.

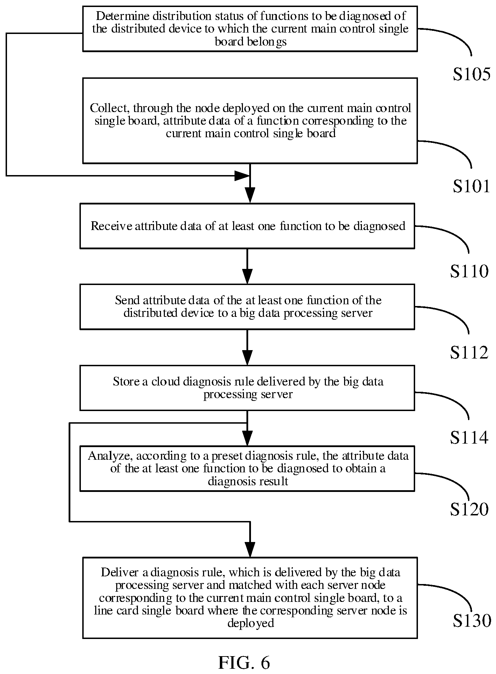

Accordingly, before the operation of receiving the attribute data of the at least one function to be diagnosed (i.e., operation S110), as shown in FIG. 6, the fault diagnosis method may further include operation S101. At operation S101, collecting, through the node deployed on the current main control single board, attribute data of a function corresponding to the current main control single board.

In other words, the attribute data received by the center server node configured on the main control single board may include both attribute data acquired by a local node and attribute data acquired by a remote node.

In the present disclosure, as shown in FIG. 6, before operation S110, the fault diagnosis method may further include operation S105. At operation S105, determining distribution status of functions to be diagnosed of the distributed device to which the current main control single board belongs.

In the present disclosure, the distribution status of the functions to be diagnosed of the distributed device may be determined by parsing a distribution description script of the functions to be diagnosed.

It should be noted that the distribution description script may be a script configured in deployment of the center server node.

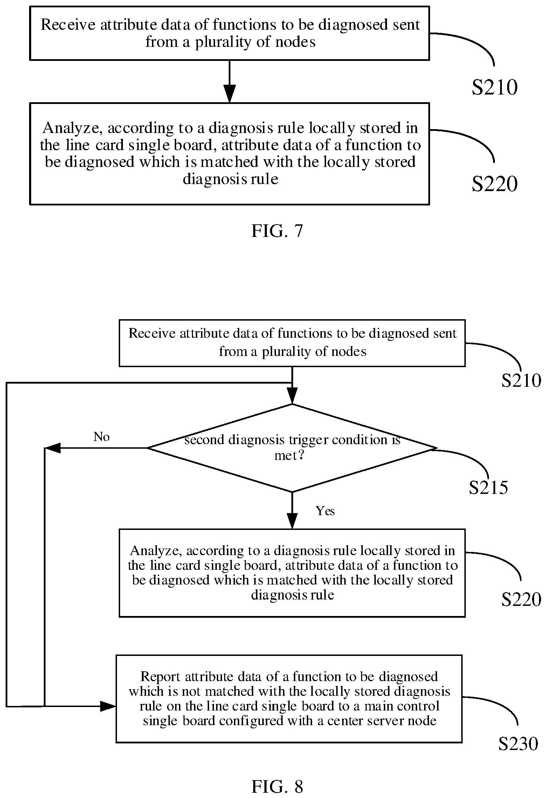

As a second aspect of the present disclosure, there is further provided a fault diagnosis method applicable to a line card single board of a distributed device. As shown in FIG. 7, the fault diagnosis method includes: operations S210 and S220.

At operation S210, receiving attribute data of functions to be diagnosed sent from a plurality of nodes.

At operation S220, analyzing, according to a diagnosis rule locally stored in the line card single board, attribute data of a function to be diagnosed which is matched with the locally stored diagnosis rule, to obtain a diagnosis result.

This fault diagnosis method is implemented by a server node deployed on the line card single board, a region managed by each server node may have multiple functions, and the line card single board may analyze the received attribute data to judge whether any function in the region managed by the server node on the line card single board has a fault.

In the present disclosure, the timing for performing operation S220 is not specifically limited. Before analyzing, according to the diagnosis rule locally stored in the line card single board, attribute data of the function to be diagnosed which is matched with the locally stored diagnosis rule, as shown in FIG. 8, the fault diagnosis method may further include operation S215.

At operation S215, judging whether a second diagnosis trigger condition is met. When the judgment result of operation S215 is yes, operation S220 is performed. When the judgment result of operation S215 is no, operation S220 is not performed.

In the present disclosure, the second diagnosis trigger condition is not specifically limited. For example, the second diagnosis trigger condition may be that "the function to be diagnosed is a function that can be diagnosed by a server node configured on the current line card single board."

As an optional implementation, ID information may be configured in each function to be diagnosed, and ID information of functions which can be diagnosed by the current line card single board is also configured locally on the line card single board. Therefore, by comparing the function ID information carried in the received attribute data with the locally stored ID information, it may be judged whether the function to be diagnosed meets the second diagnosis trigger condition.

In the present disclosure, whether the second diagnosis trigger condition is met may be judged by parsing a second condition script that triggers the diagnostic function. Specifically, the second condition script configured locally on the line card single board may carry ID information of functions which can be diagnosed by the current line card single board.

The second condition script may be a script configured in deployment of the server node.

In order to better diagnose the function to be diagnosed of the distributed device, as an optional implementation, as shown in FIG. 8, the fault diagnosis method may further include operation S230. At operation S230, reporting attribute data of a function to be diagnosed which is not matched with the locally stored diagnosis rule on the line card single board to the main control single board configured with the center server node.

The line card single board is configured with the server node, and the server node manages a plurality of nodes. In the present disclosure, each server node configured in the line card single board has a partial diagnostic function. In other words, the diagnosis rule stored on the line card single board can be used to diagnose and process merely certain types of faults of the function to be diagnosed, and once beyond a processing range of the current server node, the line card single board configured with the current server node will report the attribute data corresponding to the diagnostic function to a center server node corresponding to the server node, and the center server node diagnoses the function to be diagnosed.

The fault diagnosis method according to the second aspect of the present disclosure may be used in cooperation with the fault diagnosis method according to the first aspect of the present disclosure to further improve the efficiency of fault diagnosis.

In the present disclosure, how the line card single board obtains the locally stored diagnosis rule is not specifically limited. For example, the diagnosis rules stored locally on the line card single board may be obtained by being pre-configured by a maintenance person. Apparently, the center server node, corresponding to the server node configured on the current line card single board, may deliver the diagnosis rule for the server node. Specifically, the diagnosis rule delivered by the center server node may be a diagnosis rule generated by a big data processing server and corresponding to a function managed by the server node.

Multiple complete functions, or a part of a certain function, may be deployed on a same line card single board. In other words, the nodes on the current line card single board may cooperate with nodes on other line card single board(s) to implement a certain function. A function that is desired to be implemented through cooperation of multiple line card single boards is referred to as a cross-board function. In the present disclosure, since the current line card single board cannot acquire data from other line card single boards, the function to be diagnosed which is not matched with the diagnosis rule locally stored on the line card single board is a cross-board function.

Accordingly, each node for the function to be diagnosed which is matched with the locally stored diagnosis rule on the line card single board is deployed locally on the line card single board.

In the present disclosure, distribution status of the nodes corresponding to each function may be recorded by configuring a node description script in deployment of the server node. Specifically, each node has an ID code, and ID codes of different nodes corresponding to a same function are at least partially identical.

In addition, conclusions or actions corresponding to the attribute data may be carried in the node description script.

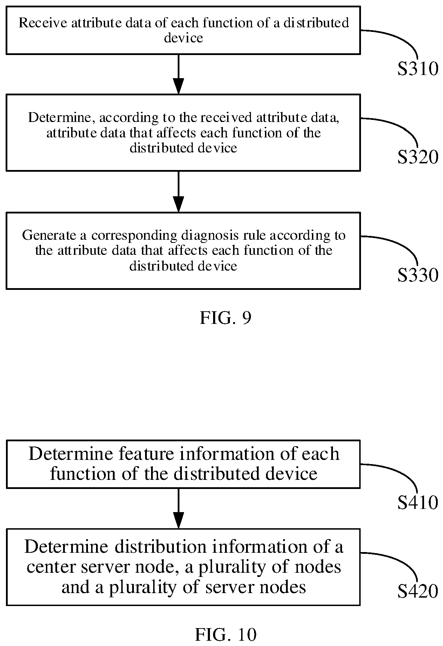

As a third aspect of the present disclosure, there is further provided a method for determining a fault diagnosis rule, which is applicable to a big data processing server. As shown in FIG. 9, the method for determining a fault diagnosis rule includes: operations S310, S320 and S330.

At operation S310, receiving attribute data of each function of a distributed device.

At operation S320, determining, according to the received attribute data, attribute data that affects each function of the distributed device.

At operation S330, generating a corresponding diagnosis rule according to the attribute data that affects each function of the distributed device.

The attribute data of each function may be sent to a big data processing server from a center server node, or to the big data processing server from a server node, or directly to the big data processing server from nodes.

It should be noted that the "attribute data that affects each function of the distributed device" here refers to the attribute data corresponding to "critical attributes" described above. According to the method for determining a fault diagnosis rule, the critical attributes affecting each function of the distributed device can be determined, and in cooperation with the fault diagnosis method according to the first aspect of the present disclosure and the fault diagnosis method according to the second aspect of the present disclosure, the key attributes of the distributed device can be optimized targetedly, and finally, the performance of the distributed device is improved.

The big data processing server may collect attribute data of various functions of a plurality of distributed devices. Different distributed devices may perform a same function, and different faults may occur in different distributed devices performing the same function. Through the big data processing server, more data types can be received, and more comprehensive diagnosis rules can be generated.

As a fourth aspect of the present disclosure, there is further provided a method for deploying a diagnostic function of a distributed device. As shown in FIG. 10, the method for deploying a diagnostic function of a distributed device includes: operations S410 and S420.

At operation S410, determining feature information of each function of the distributed device.

At operation S420, determining distribution information of a center server node, a plurality of nodes and a plurality of server nodes. The center server node is configured on a main control single board among a plurality of single boards of the distributed device, each function of the distributed device corresponds to a plurality of nodes, the nodes are configured to collect attribute data of the corresponding function, the server nodes are configured on at least one single board of the distributed device, and the nodes are configured on at least one single board of the distributed device.

For any function of the distributed device, the function may be deployed on one single board, or may be deployed on multiple single boards. Therefore, for any function, feature information of the function may include ID information of a single board on which the function is deployed, and attribute data of each attribute of the function.

Here, the main control single board can implement the fault diagnosis method according to the first aspect of the present disclosure, and a line card single board on which the server node is deployed can implement the fault diagnosis method according to the second aspect of the present disclosure.

It should be noted that one node may be deployed on a same single board or multiple single boards. In other words, software or hardware on the multiple single boards may cooperate to implement the function of one node.

In the method for deploying a diagnostic function of a distributed device according to the present disclosure, by deploying the center server node, the server nodes, and the nodes, the fault diagnosis method according to the first aspect of the present disclosure and the fault diagnosis method according to the second aspect of the present disclosure can be implemented during running of the distributed device, and the big data processing server, as an assistance, implements the method for determining a fault diagnosis rule according to the third aspect of the present disclosure.

As an optional implementation, the method for deploying a diagnostic function of a distributed device may further include: configuring and parsing a first diagnostic function distribution description script on the main control single board. By parsing the first diagnostic function distribution script, the main control single board can determine distribution status of the functions to be diagnosed on the distributed device.

As an optional implementation, the method for deploying a diagnostic function of a distributed device may further include: configuring and parsing a second diagnostic function distribution description script on a single board on which a server node is deployed. By parsing the second diagnostic function distribution script, the single board on which the server node is deployed can determine distribution status of functions to be diagnosed in a region managed by the server node.

As an optional implementation, the method for deploying a diagnostic function of a distributed device may further include: configuring a node description script of functions to be diagnosed, which is to be parsed by a line card single board configured with a corresponding server node. The node description script includes a region where the functions to be diagnosed are distributed, ID information (for example, an ID code) of each node in a same function to be diagnosed, and an action or conclusion corresponding to each piece of attribute data.

As an optional implementation, the node description script may further include conclusions or actions corresponding to the attribute data collected by the node in various cases. That is, the node description script may further include a local diagnosis rule.

As an optional implementation, the method for deploying a diagnostic function of a distributed device may further include: configuring a first condition script which is to be parsed by the main control single board, and judging, by the main control single board, whether a current condition of the main control single board meets the first diagnosis condition according to the parsed result.

As an optional implementation, the method for deploying a diagnostic function of a distributed device may further include: configuring a second condition script which is to be parsed by the single board configured with the server node, and judging, by the single board, whether a current condition of the single board configured with the server node meets the second diagnosis condition according to the parsed result.

As a fifth aspect of the present disclosure, there is further provided a main control single board, including: a first memory having a first executable program stored thereon; and one or more first processors. The one or more first processors are capable of invoking the first executable program to implement the fault diagnosis method according to the first aspect of the present disclosure.

The working principle and the beneficial effects of the fault diagnosis method have been described in detail above, and are not repeated here.

It should be noted that, in addition to implementing the fault diagnosis method, the main control single board can also implement other functions of a main control single board.

For example, a first processor of the main control single board may control and manage a distributed device including multiple line card single boards, and perform initialization configuration and management on each module inside the main control single board.

The first processor is a device with data processing capability, including but not limited to a CPU or the like. The first memory is a device with a data storage capability including but not limited to, a random access memory (RAM) (more specifically a synchronous dynamic random access memory (SDRAM), a double data rate (DDR) or the like), a read only memory (ROM), an electrically erasable programmable read only memory (EEPROM), or a flash.

As an optional implementation, the main control single board may further include an I/O interface (read/write interface), where the I/O interface is connected between the first processor and the first memory to enable information interaction between the first processor and the first memory, and includes, but is not limited to, a bus or the like.

As an optional implementation, the first processor, the first memory, and the I/O interface are connected to each other through the bus, and in turn connected to other components of the main control single board.

As a sixth aspect of the present disclosure, there is further provided a line card single board, including: a second memory having a second executable program stored thereon; and one or more second processors. The one or more second processors are capable of invoking the second executable program to implement the fault diagnosis method according to the second aspect of the present disclosure.

It should be noted that the line card single board is a service single board in the distributed device, and has a function of processing services.

When the distributed device is a high-end router, the line card single board may further have functions including interface access, routing forwarding, scheduling and shaping of service flows, and the like. In addition, the line card single board can also complete multiple functions such as management and monitoring of control codes, protocol processing, clock synchronization and the like.

The second processor is a device with data processing capability, including but not limited to a CPU or the like. The second memory is a device with a data storage capability including but not limited to, a random access memory (RAM, more specifically SDRAM, DDR, etc.), a read only memory (ROM), an electrically erasable programmable read only memory (EEPROM) or a flash.

As an optional implementation, the line card single board may further include an I/O interface (read/write interface), where the I/O interface is connected between the second processor and the second memory to enable information interaction between the second processor and the second memory, and includes, but is not limited to, a bus or the like.

As an optional implementation, the second processor, the second memory, and the I/O interface are connected to each other through the bus, and in turn connected to other components of the line card single board.

Each function of the distributed device may be completed by a line card single board, or by a plurality of line card single boards in cooperation.

The present disclosure further provides a big data processing server, including: a third memory having a third executable program stored thereon; and one or more third processors. The one or more third processors are capable of invoking the third executable program to implement the method for determining a fault diagnosis rule according to the third aspect of the present disclosure.

The third processor is a device with data processing capability, including but not limited to a CPU or the like. The third memory is a device with a data storage capability including but not limited to, a random access memory (RAM, more specifically SDRAM, DDR, etc.), a read only memory (ROM), an electrically erasable programmable read only memory (EEPROM) or a flash.

As an optional implementation, the big data processing server may further include an I/O interface (read/write interface), where the I/O interface is connected between the third processor and the third memory to enable information interaction between the third processor and the third memory, and includes, but is not limited to, a bus or the like.

As an optional implementation, the third processor, the third memory, and the I/O interface are connected to each other through the bus, and in turn connected to other components of the big data processing server.

As a seventh aspect of the present disclosure, there is provided a distributed device, including a plurality of single boards, including a main control single board, and at least one line card single board as described in the present disclosure.

In the distributed device of the present disclosure, a plurality of server nodes and a plurality of nodes may be deployed.

Each single board of the distributed device has a CPU to implement a corresponding function. For example, the main control single board is configured to control and manage a distributed device having a plurality of processors, but it should be noted that in the distributed device, merely one main control single board is in an operating state.

The line card single board is a service processing single board, and when the distributed device is used as a high-end router, the line card single board may be in charge of interface access, routing forwarding, scheduling and shaping of service flows, as well as more functions such as management and monitoring of control codes, protocol processing, clock synchronization and the like. Each of the above functions may be performed by a single node or by multiple nodes in cooperation. Apparently, one node may participate in multiple functions.

In the distributed device, one or no center server node may be deployed.

When one center server node is deployed, the main control single board is the main control single board of the present disclosure as described above.

When processing a normal service, by deploying the center server node, the server nodes and the nodes, the distributed device of the present disclosure can implement rapid fault diagnosis and repair, so that the device maintenance cost is significantly saved, the influence on users is reduced, and the user experience is improved.

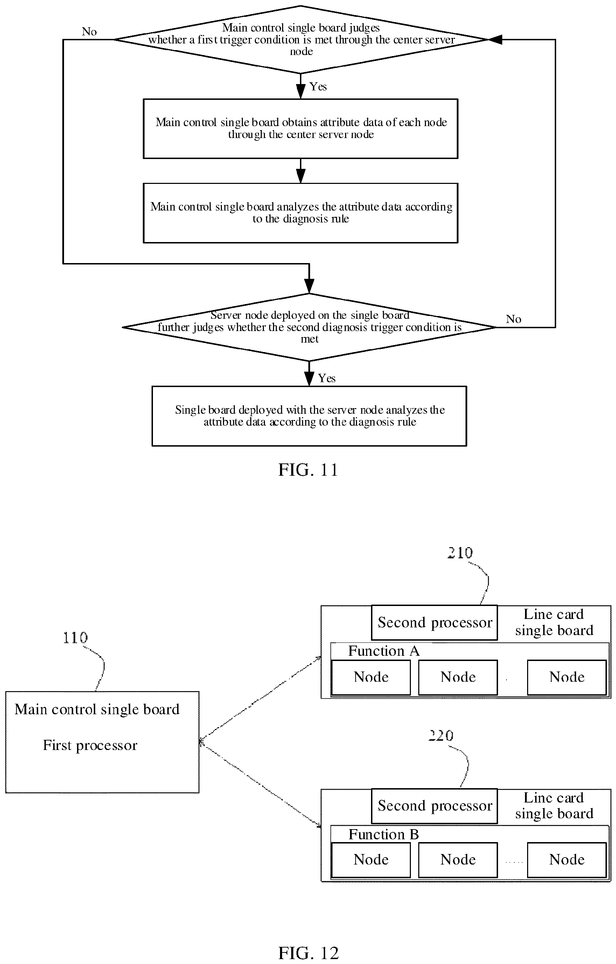

The principle of fault diagnosis of the distributed device provided in the present disclosure is described in detail below with reference to FIG. 11.

Firstly, the main control single board judges whether a function to be diagnosed meets a first trigger condition through the center server node. When the judgment result is yes (i.e., the first diagnosis trigger condition is met), the main control single board obtains attribute data of each node through the center server node. The main control single board analyzes the attribute data according to the diagnosis rule and gives a diagnosis result. When the judgment result is no (i.e., the first diagnosis trigger condition is not met), the server node deployed on the single board further judges whether the function to be diagnosed meets the second diagnosis trigger condition.

Accordingly, no matter whether the first diagnosis trigger condition is met, the server node deployed on the single board always executes the operation of judging whether the second diagnosis trigger condition is met. When the judgment result is yes (i.e., the second diagnosis trigger condition is met), the single board deployed with the server node obtains attribute data collected by the node; and the single board deployed with the server node analyzes the attribute data according to the diagnosis rule and gives a diagnosis result.

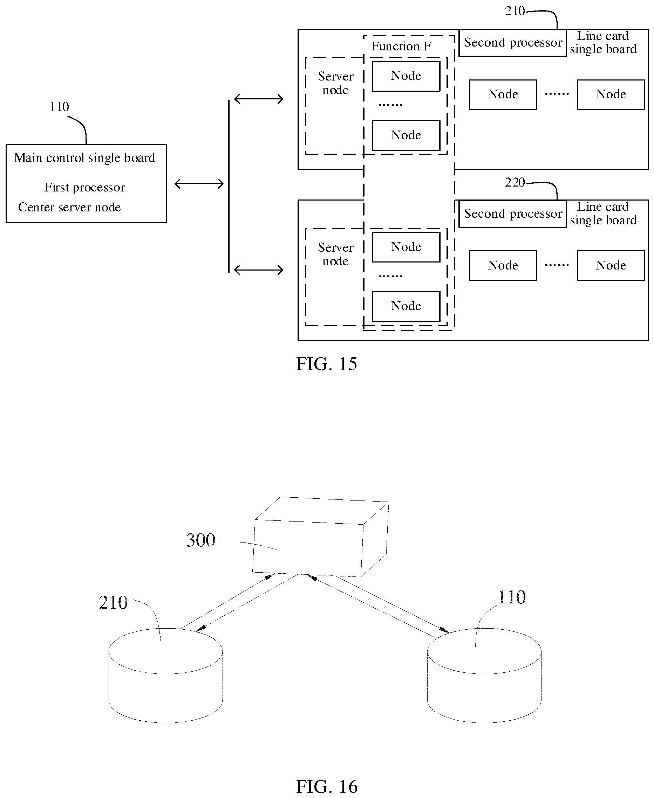

FIG. 16 is a schematic diagram showing interaction between a big data processing server and a distributed device. As shown in the figure, a big data processing server 300 receives attribute data uploaded by each single board (including a main control single board 110 and a line card single board 220) of the distributed device, and delivers a generated rule to the main control single board of the distributed device.

The present disclosure further provides an electronic device, including: a fourth memory having a fourth executable program stored thereon; and one or more fourth processors. The one or more fourth processors are capable of invoking the fourth executable program to implement the method for deploying a diagnostic function of a distributed device according to the fourth aspect of the present disclosure.

The fourth processor is a device with data processing capability, including but not limited to a CPU or the like. The fourth memory is a device with a data storage capability including but not limited to, a random access memory (RAM, more specifically SDRAM, DDR, etc.), a read only memory (ROM), an electrically erasable programmable read only memory (EEPROM) or a flash.

As an optional implementation, the electronic device may further include an I/O interface (read/write interface), where the I/O interface is connected between the fourth processor and the first memory to enable information interaction between the fourth processor and the fourth memory, and includes, but is not limited to, a bus or the like.

As an optional implementation, the fourth processor, the fourth memory, and the I/O interface are connected to each other through the bus, and in turn connected to other components of the electronic device.

As an eighth aspect of the present disclosure, there is provided a computer-readable storage medium having stored thereon an executable program which, when invoked, causes any one of: the fault diagnosis method according to the first aspect of the present disclosure, the fault diagnosis method according to the second aspect of the present disclosure, the method for determining a fault diagnosis rule according to the third aspect of the present disclosure, or the method for deploying a diagnostic function of a distributed device according to the fourth aspect of the present disclosure, to be implemented.

The computer-readable storage medium includes, but is not limited to, an RAM, an ROM, an EEPROM, a flash or any other memory technology, a CD-ROM, a digital versatile disc (DVD) or any other optical disc storage, a magnetic cartridge, a magnetic tape, a magnetic disk storage or any other magnetic storage device, or may be any other medium used for storing the desired information and accessible by a computer. Moreover, it is well known to those ordinary skilled in the art that a communication medium typically includes a computer-readable instruction, a data structure, a program module, or other data in a modulated data signal, such as a carrier wave or other transport mechanism, and may include any information delivery medium.

FIG. 12 is a schematic diagram of a distributed router (i.e., the high-end router described above). This distributed device includes a main control single board 110 and a plurality of line card single boards (two line card single boards, i.e., a line card single board 210 and a line card single board 220, are shown in the figure).

The main control single board 110 is configured to control and manage a distributed device having a plurality of processors, but it should be noted that in the distributed device, merely one main control single board 110 is in an operating state.

The line card single board is a service processing single board, and in charge of interface access, routing forwarding, scheduling and shaping of service flows, as well as more functions such as management and monitoring of control codes, protocol processing, clock synchronization and the like. Each of the above functions may be performed by a single node or by multiple nodes in cooperation. Apparently, one node may participate in multiple functions. In the implementation shown in FIG. 12, it is schematically shown that nodes on the line card single board 210 may complete function A, and nodes on the line card single board 220 may complete function B. The line card single board 210 and the line card single board 220 can both perform information interaction with the main control single board 110.

Apparently, multiple line card single boards may cooperate to implement a specific function (for convenience of description, referred to as a cross-board function).

### Example 1

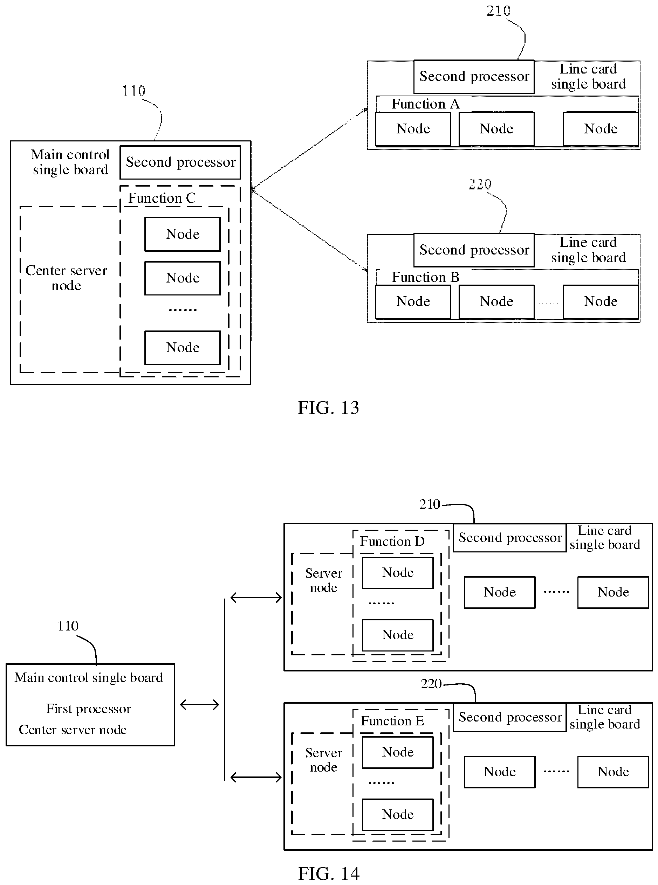

As shown in FIG. 13, a function C to be diagnosed is distributed solely on the main control single board 110 which is configured with a center server node and a plurality of nodes. Attribute data of the function to be diagnosed is to be acquired by nodes on the main control single board 110, and analyzed by the main control single board 110, thereby obtaining a diagnosis result.

### Example 2

As shown in FIG. 14, a function D to be diagnosed is distributed on the line card single board 210, and a function E to be diagnosed is distributed on the line card single board 220. A server node configured on the line card single board 210 may diagnose and process the function D based on the attribute data acquired by the nodes corresponding to the function D; and a server node configured on the line card single board 220 may diagnose and process the function E based on the attribute data acquired by the nodes corresponding to the function E.

Moreover, the line card single board 210 may independently diagnose the function D without reporting to the main control single board 110, and the line card single board 220 may independently diagnose the function E without reporting to the main control single board 110.

### Example 3

As shown in FIG. 15, a function to be diagnosed is deployed on different line card single boards, i.e., the function F to be diagnosed is a cross-board function. The server node on the line card single board 210 cannot acquire attribute data of nodes deployed on the line card single board 220, while the line card single board 220 cannot acquire attribute data of nodes deployed on the line card single board 220. In this case, the line card single board 210 and the line card single board 220 report their respectively obtained data of the function F to the main control single board 110, where the main control single board 110 analyzes the attribute data reported by the line card single board 210 and the line card single board 220s, and diagnoses the function F to be diagnosed.

The present disclosure has disclosed exemplary embodiments, and although specific terms are employed, they are used and should be interpreted merely in a generic and descriptive sense, not for purposes of limitation. In some instances, as would be apparent to one skilled in the art, features, characteristics and /or elements described in connection with a particular embodiment may be used alone or in combination with features, characteristics and /or elements described in connection with another embodiment, unless expressly stated otherwise. It will, therefore, be understood by those skilled in the art that various changes in form and details may be made therein without departing from the scope of the present disclosure as set forth in the appended claims.

## Claims

**1.** A fault diagnosis method applicable to a main control single board of a distributed device, comprising:
receiving attribute data of a function to be diagnosed; and
analyzing, according to a preset diagnosis rule, the attribute data of the function to be diagnosed to obtain a diagnosis result.

**2.** The fault diagnosis method according to claim 1, wherein the preset diagnosis rule comprises a local diagnosis rule stored locally in advance and /or a cloud diagnosis rule delivered by a big data processing server.

**3.** The fault diagnosis method according to claim 2, wherein the preset diagnosis rule comprises the cloud diagnosis rule, and before analyzing, according to the preset diagnosis rule, the attribute data of the function to be diagnosed, the fault diagnosis method further comprises:
sending attribute data of at least one function of the distributed device to the big data processing server; and
storing the cloud diagnosis rule delivered by the big data processing server.

**4.** The fault diagnosis method according to claim 3, wherein storing the cloud diagnosis rule delivered by the big data processing server comprises:
receiving at least one diagnosis rule delivered by the big data processing server;
determining, from the received at least one diagnosis rule, a diagnosis rule corresponding to the main control single board as the cloud diagnosis rule; and
storing the cloud diagnosis rule.

**5.** The fault diagnosis method according to claim 4, wherein the attribute data of the function to be diagnosed is sent from a server node, and the fault diagnosis method further comprises:
delivering a diagnosis rule, which is delivered by the big data processing server and matched with each server node corresponding to the main control single board, to a line card single board where the corresponding server node is deployed.

**6.** The fault diagnosis method according to claim 5, wherein a node is deployed on the main control single board, and before receiving the attribute data of the function to be diagnosed, the fault diagnosis method further comprises:
collecting, through the node deployed on the main control single board, attribute data of a function corresponding to the main control single board; wherein the received attribute data of the function to be diagnosed comprises attribute data collected by the node deployed on the main control single board.

**7.** The fault diagnosis method according to any one of claims 1 to 6, wherein before analyzing, according to the preset diagnosis rule, the function to be diagnosed, the method further comprises:
determining that the function to be diagnosed meets a first diagnosis trigger condition.

**8.** The fault diagnosis method according to any one of claims 1 to 6, wherein before receiving the attribute data of the function to be diagnosed, the method further comprises:
determining distribution status of at least one function to be diagnosed of the distributed device to which the main control single board belongs.

**9.** A fault diagnosis method applicable to a line card single board of a distributed device, comprising:
receiving attribute data of functions to be diagnosed sent from a node; and
analyzing, according to a diagnosis rule locally stored in the line card single board, attribute data of a function to be diagnosed which is matched with the locally stored diagnosis rule, to obtain a diagnosis result.

**10.** The fault diagnosis method according to claim 9, wherein before analyzing, according to the diagnosis rule locally stored in the line card single board, attribute data of the function to be diagnosed which is matched with the locally stored diagnosis rule, the method further comprises:
determining that the function to be diagnosed which is matched with the locally stored diagnosis rule meets a second diagnosis trigger condition.

**11.** The fault diagnosis method according to claim 9, further comprising:
reporting the received attribute data of a function to be diagnosed which is not matched with the locally stored diagnosis rule to a main control single board.

**12.** The fault diagnosis method according to claim 11, wherein the function to be diagnosed which is not matched with the locally stored diagnosis rule is a cross-board function, and a part of nodes for the cross-board function is deployed on the line card single board, while the remaining part of nodes for the cross-board function is deployed on other line card single boards; and
each node for the function to be diagnosed which is matched with the locally stored diagnosis rule is deployed locally on the line card single board.

**13.** The fault diagnosis method according to any one of claims 9 to 12, wherein before receiving the attribute data of the functions to be diagnosed sent from the node, the method further comprises:
determining a function corresponding to the line card single board.

**14.** The fault diagnosis method according to any one of claims 9 to 12, further comprising:
receiving a diagnosis rule corresponding to the line card single board, wherein the diagnosis rule is delivered by a main control single board corresponding to the line card single board.

**15.** A method for determining a fault diagnosis rule, which is applicable to a big data processing server and comprises:
receiving attribute data of at least one function of a distributed device;
determining, according to the received attribute data of the at least one function, attribute data that affects the at least one function of the distributed device; and
generating a corresponding diagnosis rule according to the attribute data that affects the at least one function of the distributed device.

**16.** The method for determining a fault diagnosis rule according to claim 15, further comprising:
generating a corresponding optimization rule according to the attribute data that affects the at least one function of the distributed device.

**17.** A method for deploying a diagnostic function of a distributed device, comprising:
determining feature information of at least one function of the distributed device; wherein the distributed device comprises a plurality of single boards, comprising a main control single board and at least one line card single board; and
determining distribution information of a center server node, a node and a server node;
wherein the center server node is configured on the main control single board, and the main control single board configured with the center server node is capable of implementing the fault diagnosis method according to any one of claims 1 to 8;
any one of the at least one function corresponds to a plurality of nodes, any one of the plurality of nodes is configured to collect attribute data of the function, and the plurality of nodes are configured on at least one of the plurality of single boards; and
the server node is configured on at least one of the plurality of single boards, and the line card single board configured with the server node is capable of implementing the fault diagnosis method according to any one of claims 9 to 14.

**18.** A main control single board, comprising:
one or more first processors; and
a first memory having a first executable program stored thereon; wherein
the one or more first processors are capable of invoking the first executable program to implement the fault diagnosis method according to any one of claims 1 to 8.

**19.** A line card single board, comprising:
one or more second processors; and
a second memory having a second executable program stored thereon; wherein
the one or more second processors are capable of invoking the second executable program to implement the fault diagnosis method according to any one of claims 9 to 14.

**20.** A distributed device, comprising: a main control single board according to claim 18, and at least one line card single board according to claim 19.

**20.** A computer-readable storage medium having an executable program stored thereon which, when invoked, causes any one of:
the fault diagnosis method according to any one of claims 1 to 8;
the fault diagnosis method according to any one of claims 9 to 14;
the method for determining a fault diagnosis rule according to claim 15 or 16; or
the method for deploying a diagnostic function of a distributed device according to claim 17, to be implemented.
